# EUROPÄISCHE PATENTSCHRIFT

(11) **EP 1 538 117 B1**
(45) Veröffentlichungstag und Bekanntmachung des Hinweises auf die Patenterteilung: **21.03.2007**
(21) Anmeldenummer: 03027608.3
(22) Anmeldetag: 02.12.2003
(51) Int. Cl.: B65G 47/90, B23Q 5/34, B25J 9/10

(54) **Handhabungsgerät zum Umpositionieren von Teilen**
Manipulator for transferring pieces
Manipulateur pour le transfert de pièces

(43) Veröffentlichungstag der Anmeldung: 08.06.2005
(73) Patentinhaber: Festo AG & Co., 73734 Esslingen (DE)
(72) Erfinder: Feyrer, Thomas, 73732 Esslingen (DE)
(74) Vertreter: Abel, Martin

(56) Entgegenhaltungen:
- EP-A- 1 164 098
- WO-A-01/68490
- DE-A- 19 512 570

## Beschreibung

Die Erfindung betrifft ein Handhabungsgerät zum Umpositionieren von Teilen, mit einem zum Tragen eines Greifers dienenden, entlang einer zwei zueinander parallele lineare Endabschnitte aufweisenden U-förmigen Handhabungsbahn verlagerbaren Greiferträger, der über erste Linearführungsmittel relativ zu einem Führungsschlitten entlang einer ersten Bewegungsachse linear verstellbar geführt ist, der seinerseits über zweite Linearführungsmittel relativ zu einem Schlittenträger entlang einer zu der ersten Bewegungsachse rechtwinkeligen zweiten Bewegungsachse verstellbar geführt ist, wobei der Greiferträger mit einem Bahnkurvenfolger verbunden ist, der mit einer zumindest einen Teil des gewünschten Verlaufes der Handhabungsbahn definierenden, bezüglich dem Schlittenträger ortsfesten Bahnvorgabekurve in Eingriff steht, die zwei in Richtung der zweiten Bewegungsachse zueinander beabstandete und jeweils mit der ersten Bewegungsachse gleichgerichtete erste und zweite lineare Kurvenendabschnitte aufweist, und wobei ein Steuerhebel vorhanden ist, der an einer ersten Koppelstelle bezüglich einer ersten Schwenkachse verschwenkbar mit dem Greiferträger verbunden ist und an einer zu der ersten Koppelstelle beabstandeten zweiten Koppelstelle mit einem Antriebsteil verbunden ist, das zwischen zwei Antriebsendpositionen eine Antriebsbewegung ausführen kann, um die Verlagerung des Greiferträgers entlang der Handhabungsbahn hervorzurufen.

Ein Handhabungsgerät dieser Art geht aus der WO 01/68490 A1 hervor. Es dient zum Umpositionieren von Teilen, die an einer ersten Position im Rahmen einer Linearbewegung aufgenommen und anschließend an einer zweiten Position mit einer neuerlichen Linearbewegung abgesetzt werden. Das jeweils umzupositionierende Teil wird während die Umpositioniervorganges von einem geeigneten Greifer gehalten, der an einem Greiferträger des Handhabungsgerätes sitzt und zusammen mit diesem eine U-förmige Handhabungsbahn durchläuft, wobei sich lediglich seine Lage, nicht jedoch seine Orientierung im Raum verändert. Es ist auf diese Weise möglich, Teile zu Beginn und am Ende des Umpositioniervorganges ein Stück weit linear zu bewegen, beispielsweise um Schrauben oder kurze Wellenstücke aus zugeordneten Halterungen zu entnehmen und in vorgesehene Ausnehmungen einzusetzen. Handhabungsgeräte der erwähnten Art werden auch als "Pick-And-Place"-Geräte bezeichnet.

Bei dem bekannten Handhabungsgerät wird die Bewegung des Greiferträgers aus der Schwenkbewegung eines um eine ortsfeste Schwenkachse verschwenkbaren Steuerhebels abgeleitet, der an einer Koppelstelle verschwenkbar und zugleich radial verstellbar mit dem Greiferträger in Eingriff steht. Da der Greiferträger gleichzeitig über einen Bahnkurvenfolger mit einer ortsfesten U-förmigen Bahnvorgabekurve in Eingriff steht, ergibt sich aus den Schwenkbewegung des Steuerhebels die gewünschte Handhabungsbahn des Greiferträgers, wobei der Greiferträger über die aus dem Führungsschlitten und dem Schlittenträger gebildete Kreuzschlittenanordnung abgestützt und geführt ist und zugleich im Bereich der Koppelstelle radial mit Bezug zu der genannten Schwenkachse und somit in Längsrichtung des Schwenkhebels relativ zu diesem bewegt wird.

Bei dem bekannten Handhabungsgerät lässt sich der Abstand der beiden linearen Endabschnitte der Handhabungsbahn theoretisch zwar beliebig groß ausführen, indem ein entsprechend langer Zwischenabschnitt der Bahnvorgabekurve zwischen den beiden linearen Kurvenendabschnitten gewählt wird. Allerdings bedingt dies eine relativ große Länge des Steuerhebels mit der Folge, dass das Handhabungsgerät nicht nur in Richtung der zweiten Bewegungsachse, sondern auch in Richtung der ersten Bewegungsachse relativ große Abmessungen erhalten würde.

In der DE 36 03 650 C2 wurde zwar bereits ein als Übergabevorrichtung bezeichnetes Handhabungsgerät vorgeschlagen, mit dem sich ein Greifer entlang einer U-förmigen Handhabungsbahn mit zueinander parallelen Bahnendabschnitten unter ständiger Beibehaltung seiner räumlichen Orientierung verlagern lässt. Das dabei zur Anwendung gelangende Antriebskonzept ist allerdings relativ aufwändig und erfordert ein großes Bauvolumen, indem zwingend zwei fluidbetätigte Arbeitszylinder benötigt werden, um den gewünschten Bahnverlauf zu realisieren. Diese beiden Arbeitszylinder führen zudem jeweils eine Schwenkbewegung aus, was die weitere Folge hat, dass der Greifer an der ihn antreibenden Kolbenstange des einen Arbeitszylinders seinerseits verschwenkbar gelagert sein muss.

Es ist die Aufgabe der vorliegenden Erfindung, ein Handhabungsgerät der eingangs genannten Art zu schaffen, das bei kompakten Abmessungen ein Umpositionieren von Teilen auch zwischen relativ weit voneinander entfernten Stellen ermöglicht.

Diese Aufgabe wird durch die Merkmale des Anspruchs 1 gelöst.

Auf diese Weise lässt sich zwischen den beiden linearen Endabschnitten der U-förmigen Handhabungsbahn ein relativ großer Abstand realisieren, wobei gleichzeitig die Abmessungen in Richtung der ersten Bewegungsachse gering gehalten werden können. Die Bewegung des Greiferträgers wird von einem sich ausschließlich linear verlagernden Antriebsteil abgegriffen, wobei durch die besondere Anordnung des Steuerhebels und des zeitweilig mit dem Führungsschlitten in Mitnahmeeingriff stehenden Mitnehmers ein günstiger Bewegungsablauf erhalten wird. Da während des Mitnahmeeingriffes zwischen Mitnehmer und Führungsschlitten eine stabile Lage der beiden Koppelstellen relativ zu dem Führungsschlitten erzielbar ist, ist zudem zur Vorgabe eines sich zwischen den beiden linearen Endabschnitten erstreckenden Bahnzwischenabschnittes der Handhabungsbahn nicht notwendigerweise eine Bahnführung des Bahnkurvenfolgers notwendig. Dies ermöglicht die Einsparung von Herstellungs- und Materialkosten und erleichtert eine eventuell vorgesehene Variation des zwischen den beiden linearen Kurvenendabschnitten vorgesehenen Umpositionierabstandes.

Vorteilhafte Weiterbildungen der Erfindung gehen aus den Unteransprüchen hervor.

Der Mitnehmer befindet sich zweckmäßigerweise unmittelbar an der zweiten Koppelstelle. Dies ist vor allem dann von Vorteil, wenn der Mitnehmer als Steuerkurvenfolger ausgeführt ist, der mit einer am Führungsschlitten vorgesehenen Steuerkurve in Eingriff steht, die zwei gleichgerichtet mit der zweiten Bewegungsachse verlaufende lineare Steuerkurven-Endabschnitte aufweist, die in einer Kopplungszone ineinander übergehen, die bezüglich der Richtung der zweiten Bewegungsachse auf gleicher Höhe mit dem Bahnkurvenfolger liegt, dessen bezüglich dem Führungsschlitten in Richtung der zweiten Bewegungsachse eingenommene Relativlage ständig gleich bleibt. In der Kupplungszone findet sich eine mit dem Führungsschlitten verbundene Anschlagfläche, die einen vorübergehenden Mitnahmeeingriff des Mitnehmers ermöglicht. Solange sich der Bahnkurvenfolger in einem der linearen Kurvenendabschnitte bewegt, liegt noch kein Mitnahmeeingriff vor und es findet eine Relativbewegung zwischen einerseits dem Mitnehmer und dem Antriebsteil und andererseits dem Führungsschlitten statt. Zur Überbrückung des Umpositionierabstandes wird dann aber auch der Führungsschlitten in Richtung der zweiten Bewegungsachse verlagert, was durch den während dieser Phase mit dem Führungsschlitten bewegungsgekoppelten Mitnehmer hervorgerufen wird.

Um den Mitnahmeeingriff zu realisieren, ist die Steuerkurve in der Kupplungszone zweckmäßigerweise mit einem sich quer zur zweiten Bewegungsachse erstreckenden Zweigabschnitt versehen, in den der Mitnehmer auf Grund von am Führungsschlitten vorgesehenen Umlenkmitteln, in Richtung der zweiten Bewegungsachse formschlüssig, eingreifen kann.

Um eine kontinuierliche Umpositionierbewegung des Greiferträgers zu gewährleisten, ist es von Vorteil, wenn für den Übergang der Handhabungsbahn in den sich bevorzugt parallel zur zweiten Bewegungsachse erstreckenden Bahn-Zwischenabschnitt jeweils ein Bogenabschnitt der Bahnvorgabekurve vorgesehen ist. Damit der Bahnkurvenfolger diesen Bogenabschnitt sauber durchläuft, sind die der Steuerkurve zugeordneten Umlenkmittel zweckmäßigerweise so ausgebildet, dass sie einen bogenförmigen Übergangsbereich zwischen einem jeweiligen Steuerkurven-Endabschnitt und dem Zweigabschnitt definieren.

Durch ein verschwenkbares Weichenelement der Umlenkmittel kann erreicht werden, dass der von einem Steuerkurvenfolger gebildete Mitnehmer bei einer Arbeitsbewegung des Antriebsteils zunächst ausgehend vom ersten Steuerkurven-Endabschnitt in den Zweigabschnitt hineingeleitet wird und anschließend aus dem Zweigabschnitt in den darauf folgenden zweiten Steuerkurven-Endabschnitt übergeht.

Die Weichenstellung, also die erforderliche Schwenkpositionierung des Weichenelements, wird zweckmäßigerweise durch Betätigungsmittel in Abhängigkeit von der momentanen Position des Führungsschlittens gesteuert. In diesem Zusammenhang können die Betätigungsmittel mit einer bezüglich dem Schlittenträger ortsfesten Stellungsgeberkurve zusammenarbeiten.

Damit sich der Greiferträger, insbesondere zwischen zwei Bogenabschnitten der Bahnvorgabekurve, linear gleichgerichtet mit der zweiten Bewegungsachse verlagern kann, ohne einer Querabstützung durch die Bahnvorgabekurve zu bedürfen, sind vorzugsweise Abstützmittel vorhanden, die den Mitnehmer in der mit dem Zweigabschnitt der Steuerkurve zusammenwirkenden Eingriffsstellung fixieren. Diese Abstützmittel sind zweckmäßigerweise von dem Weichenelement gebildet, das so ausgebildet und verschwenkbar ist, dass es in einer den Mitnehmer untergreifenden Zwischenstellung positionierbar ist. Diese Zwischenstellung wird beispielsweise durch Federmittel vorgegeben.

Wenn jeweils ein linearer Kurvenendabschnitt mit dem sich daran anschleißenden Bogenabschnitt an einem Bahnkurventräger vorgesehen ist, wobei wenigstens einer dieser Bahnkurventräger in Richtung der zweiten Bewegungsachse relativ zum Schlittenträger in Richtung der zweiten Bewegungsachse verstellbar und positionierbar ist, lässt sich sehr bequem und äußerst variabel die Länge des Bahn-Zwischenabschnittes der gewünschten Handhabungsbahn und somit des gewünschten Umpositionierabstandes vorgeben. Beim Übergang zwischen den beiden Bahnkurventrägern bedarf es keiner Führung des Bahnkurvenfolgers in der Bahnvorgabekurve, so dass man hier nicht auf einen körperlichen Längenabschnitt der Bahnvorgabekurve angewiesen ist. Die Bahnvorgabekurve hat quasi eine Lücke, die der Bahnkurvenfolger ohne Weiteres überbrückt.

Das Antriebsteil ist vorzugsweise Bestandteil eines fluidisch oder elektrisch betätigbaren Linearantriebes. Eine besonders kompakte Anordnung ergibt sich, wenn der Schlittenträger vom Gehäuse des Linearantriebes gebildet ist.

Nachfolgend wird die Erfindung anhand der beiliegenden Zeichnung näher erläutert. In dieser zeigen:

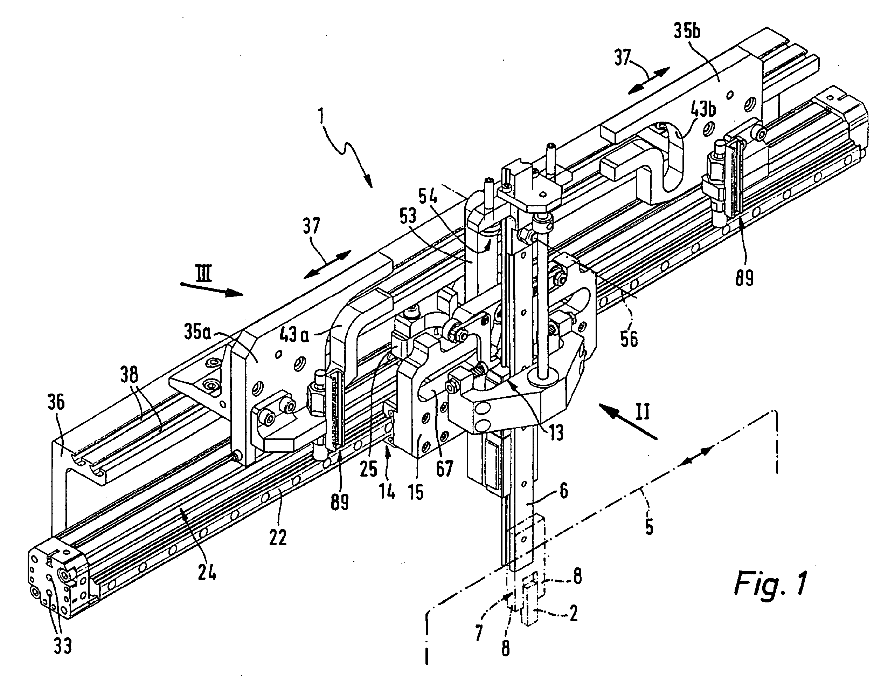

- Figur 1: eine perspektivische Vorderansicht einer bevorzugten Ausführungsform des erfindungsgemäßen Handhabungsgerätes, wobei die beim Umpositionieren eines Teils durchlaufene Handhabungsbahn strichpunktiert angedeutet ist,

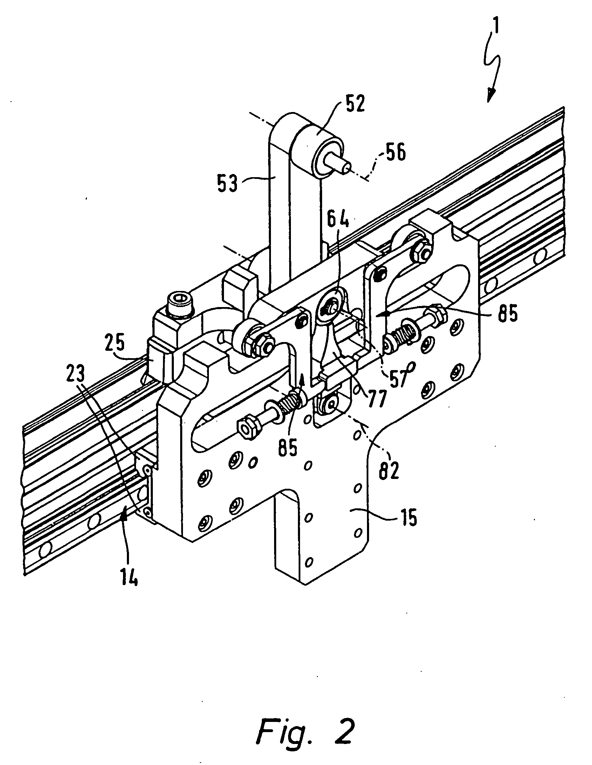

- Figur 2: eine ausschnittsweise Vorderansicht des Handhabungsgerätes aus Figur 1 mit Blickrichtung gemäß Pfeil II, wobei der Greiferträger zur Verbesserung der Übersichtlichkeit nicht abgebildet ist,

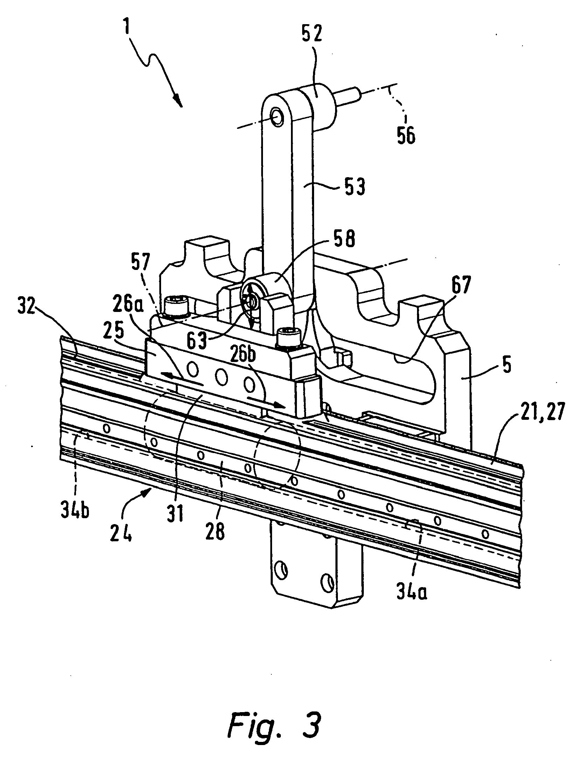

- Figur 3: die Anordnung aus Figur 2 in einer perspektivischen Rückansicht mit Blickrichtung gemäß Pfeil III aus Figur 1,
- Figur 4: eine Vorderansicht des Handhabungsgerätes aus Figur 1 in einer Teildarstellung und teilweise schematisiert, und
- Figuren 5 bis 8: sich an den Zustand der Figur 4 anschließende Betriebsstadien des Handhabungsgerätes bei der Durchführung eines Umpositioniervorganges.

Das in der Zeichnung allgemein mit Bezugsziffer 1 bezeichnete Handhabungsgerät ermöglicht ein Umpositionieren von Teilen beliebiger Art und insbesondere von Kleinteilen wie Schrauben, Bolzen oder sonstigen Teilen mit überwiegender Längserstreckung. In der Zeichnung ist ein solches umzupositionierendes Teil bei 2 strichpunktiert angedeutet. Das Handhabungsgerät 1 ist so ausgelegt, dass das Teil 2 während eines Umpositioniervorganges zwischen zwei beabstandeten Endpositionen verlagerbar ist, wobei die dabei von ihm durchlaufene Bahnkurve dem Verlauf einer ebenfalls nur strichpunktiert angedeuteten Handhabungsbahn 5 entspricht, die ein angetriebener Greiferträger 6 durchläuft, der mit einem zum lösbaren Halten des umzupositionierenden Teils 2 dienenden Greifer 7 geeigneter Bauart ausgestattet ist.

Bei dem Greifer 7 kann es sich beispielsweise um einen zangenartigen Greifer handeln, der über verschwenkbare oder parallel verschiebbare Greifbacken 8 verfügt, die sich elektrisch oder durch Fluidkraft betätigen lassen, um das Teil 2 nach Bedarf festzuhalten oder loszulassen. Als weitere mögliche Ausführungsform für den Greifer 7 können an dieser Stelle exemplarisch Sauggreifer oder Magnetgreifer genannt werden, die das handzuhabende Teil 2 durch Unterdruck oder durch Magnetkraft halten können.

Die Handhabungsbahn 5 hat einen U-förmigen Verlauf. Sie enthält zwei zueinander parallele lineare erste und zweite Bahn-Endabschnitte 12a, 12b, deren Abstand voneinander dem Umpositionierabstand des Teils 2 entspricht, also der Wegstrecke, um die das Teil 2 beim Umpositionieren versetzt wird. Zwischen den beiden Bahn-Endabschnitten 12a, 12b erstreckt sich ein linearer Bahn-Zwischenabschnitt 12c, der rechtwinkelig zu den Bahn-Endabschnitten 12a, 12b verläuft und über Bahn-Bogenabschnitte 12d, 12e mit jeweils einem der Bahn-Endabschnitte 12a, 12b verbunden ist.

Der Greiferträger 6 ist über erste Linearführungsmittel 13 an einem Führungsschlitten 15 linear verstellbar geführt. Zur Realisierung der ersten Linearführungsmittel 13 ist beim Ausführungsbeispiel der Greiferträger 6 als Führungsschiene ausgebildet oder mit einer solchen ausgestattet, die zwischen am Führungsschlitten 15 angeordneten Linearführungselementen 16 gleit- oder wälzgeführt ist. Die mögliche Linearbewegung des Greiferträgers 6 bezüglich des Führungsschlittens 15 erfolgt entlang einer strichpunktiert angedeuteten ersten Bewegungsachse 17, die parallel zu den beiden Bahn-Endabschnitten 12a, 12b ausgerichtet ist.

Der Führungsschlitten 15 ist an einem längliche Gestalt aufweisenden Schlittenträger 21 relativ zu diesem entlang einer zweiten Bewegungsachse 18 verstellbar geführt. Hierzu sind zwischen dem Führungsschlitten 15 und dem Schlittenträger 21 wirksame zweite Linearführungsmittel 14 vorgesehen, deren Aufbau demjenigen der ersten Linearführungsmittel 13 entsprechen kann. Beim Ausführungsbeispiel enthalten sie eine an dem Schlittenträger 21 angeordnete Führungsschiene 22 und mit dieser in Führungseingriff stehende, am Führungsschlitten 15 angeordnete Linearführungselemente 23. Die zweite Bewegungsachse 18 verläuft rechtwinkelig zur ersten Bewegungsachse 17 und gleichzeitig parallel zu dem linearen Bahn-Zwischenabschnitt 12c.

Auf diese Weise ergibt sich eine Kreuzschlittenanordnung, die es dem Greiferträger 6 ermöglicht, Bewegungen in Richtung der beiden Bewegungsachsen 17, 18 sowohl getrennt voneinander als auch in überlagerter Weise auszuführen. Insbesondere kann der Greiferträger 6 so bewegt werden, dass er die Handhabungsbahn 5 durchläuft. Bei dieser Bewegung behält er seine räumliche Orientierung stets bei.

Das Handhabungsgerät 1 ist ferner mit einem Linearantrieb 24 ausgestattet, der über ein Antriebsteil 25 verfügt, das zu zwei einander entgegengesetzten, durch Pfeile angedeuteten ersten und zweiten linearen Antriebsbewegungen 26a, 26b antreibbar ist, so dass sich von ihm eine entsprechende Bewegung abgreifen lässt. Bei dem Linearantrieb 24 kann es sich um einen elektrischen oder, wie abgebildet, um einen durch Fluidkraft betätigbaren Linearantrieb handeln. In beiden Fällen ist es von Vorteil, wenn es sich um einen kolbenstangenlosen Linearantrieb 24 handelt, wie dies beim Ausführungsbeispiel der Fall ist. Hier ist der Linearantrieb 24 als sogenannter Schlitzzylinder ausgeführt, der ein längliches Antriebsgehäuse 27 aufweist, in dem sich ein linear hin und her bewegbarer Antriebskolben 28 befindet, der über einen einen Längsschlitz 32 des Antriebsgehäuses 27 durchsetzenden Mitnehmer 31 mit dem außen angeordneten Antriebsteil 25 bewegungsgekoppelt ist. Über von außen zugängliche Anschlussöffnungen 33 des Antriebsgehäuses 27 können zwei im Antriebsgehäuse 27 von dem Antriebskolben 28 dicht voneinander abgetrennte Arbeitsräume 34a, 34b gesteuert mit einem Fluid beaufschlagt werden, beispielsweise mit Druckluft, um den Antriebskolben 28 und somit das mit diesem bewegungsgekoppelte Antriebsteil 25 zu der einen oder anderen Antriebsbewegung 26a, 26b anzutreiben.

Bei der besonders kostengünstigen Bauform des Ausführungsbeispiels ist der Schlittenträger 21 unmittelbar von dem Antriebsgehäuse 27 gebildet, wobei das Antriebsgehäuse 27 mit der Führungsschiene 22 ausgestattet ist.

Abgesehen von einer noch zu erläuternden, zeitweise möglichen Bewegungskopplung sind das Antriebsteil 25 und der Führungsschlitten 15 unabhängig voneinander relativ zu dem Schlittenträger 21 in Richtung der zweiten Bewegungsachse 18 verstellbar.

An dem Schlittenträger 21 sind zwei Bahnkurventräger 35a, 35b in Richtung der zweiten Bewegungsachse 18 aufeinanderfolgend angeordnet. Die Befestigung an dem Schlittenträger 21 erfolgt unter Zwischenschaltung eines Adapterteils 36, doch wäre prinzipiell auch eine direkte Befestigung möglich. Die Art der Anbringung ist so gewählt, dass wenigstens ein und vorzugsweise beide Bahnkurventräger 35a, 35b relativ zu dem Schlittenträger 21 in Richtung der zweiten Bewegungsachse 18 variabel positionierbar sind, was durch jeweils einen Doppelpfeil 37 verdeutlicht ist. Die Bahnkurventräger 35a, 35b können hierzu mit sich linear erstreckenden Befestigungsnuten 38 am Schlittenträger 21 oder an dem Adapterteil 36 in Eingriff stehen.

Die beiden Bahnkurventräger 35a, 35b definieren gemeinsam eine bezüglich dem Schlittenträger 21 ortsfeste Bahnvorgabekurve 42, die zwischen den beiden Bahnkurventrägern 35a, 35b unterbrochen ist und eine entsprechend dem zwischen den beiden Bahnkurventrägern 35a, 35b eingestellten Abstand mehr oder weniger große Lücke 44 aufweist.

Die beiden Bahnkurventräger 35a, 35b beinhalten jeweils eine Bahnkurvensektion 43a, 43b, die durch die Lücke 44 in Richtung der zweiten Bewegungsachse 18 zueinander beabstandet sind. Die erste Bahnkurvensektion 43a besteht aus einem zur ersten Bewegungsachse 17 parallelen ersten linearen Kurvenendabschnitt 45a, an den sich ein erster Bogenabschnitt 46a anschließt, der in einen linearen ersten Fortsetzungsabschnitt 47a übergeht, der parallel zur zweiten Bewegungsachse 18 verläuft. In entsprechender Weise setzt sich die zweite Bahnkurvensektion 43b aus einem zweiten linearen Kurvenabschnitt 45b, einem sich daran anschließenden zweiten Bogenabschnitt 46b und einem sich daran anschließenden zweiten Fortsetzungsabschnitt 47b zusammen. Der Abstand zwischen den beiden zueinander parallelen linearen Kurvenendabschnitten 45a, 45b entspricht dem durch die Handhabungsahn 5 zu realisierenden Umpositionierabstand. Die beiden Bogenabschnitte 46a, 46b sind so gekrümmt, dass die beiden Fortsetzungsabschnitte 47a, 47b einander zugewandt sind und über in Richtung der zweiten Bewegungsachse 18 miteinander fluchtende Mündungsbereiche 48a, 48b verfügen, zwischen denen sich die Lücke 44 der Bahnvorgabekurve 42 befindet.

Die Bahnvorgabekurve 42 ist in Bezug auf den Schlittenträger 21 insbesondere so angeordnet, dass die Enden der linearen Kurvenendabschnitte 45a, 45b der zweiten Bewegungsachse 18 zugewandt sind.

Das Handhabungsgerät 1 verfügt des Weiteren über einen Steuerhebel 53, der an einer ersten Koppelstelle 54 mit dem Greiferträger 6 verschwenkbar verbunden ist. Die zugehörige erste Schwenkachse 56 ist in der Zeichnung strichpunktiert angedeutet. Sie verläuft rechtwinkelig zu einer durch die beiden Bewegungsachsen 17, 18 aufgespannten Bewegungsebene. Die Schwenklagerung ist insgesamt so ausgeführt, dass sich radial bezüglich der ersten Schwenkachse 56 eine allseits schub- und zugfeste Verbindung zwischen dem Steuerhebel 53 und dem Greiferträger 6 einstellt.

An der ersten Koppelstelle 54 ist ferner ein Bahnkurvenfolger 52 vorgesehen, der mit dem Greiferträger 6 bewegungsgekoppelt ist. Es handelt sich dabei insbesondere um einen Rollenkörper, dessen Drehachse mit der ersten Schwenkachse 56 zusammenfällt. Beim Ausführungsbeispiel sitzt der Bahnkurvenfolger 52 zwischen dem Steuerhebel 53 und dem Greiferträger 6, so dass diese Komponenten unter Zwischenschaltung des Bahnkurvenfolgers 52 verschwenkbar und zugleich antriebsmäßig miteinander verbunden sind.

Der Bahnkurvenfolger 52 greift in die Bahnvorgabekurve 42 ein. Letztere ist beim Ausführungsbeispiel von in den Bahnkurventrägern 35a, 35b ausgebildeten Schlitzen gebildet, wobei sich der Greiferträger 6 vor und der Steuerhebel 53 hinter den Bahnkurventrägern 35a, 35b erstreckt.

An einer zu der ersten Koppelstelle 54 beabstandeten zweiten Koppelstelle 55 ist der Steuerhebel 53 antriebsmäßig mit dem Antriebsteil 25 verbunden. Die Verbindung ist in einer Weise ausgeführt, dass sich eine zu der ersten Schwenkachse 56 parallele zweite Schwenkachse 57 ergibt, um die der Steuerhebel 53 relativ zum Antriebsteil 25 verschwenkbar ist. Außerdem ergibt sich an der zweiten Koppelstelle 55 eine zumindest in Richtung der zweiten Bewegungsachse 18 schub- und zugfeste Verbindung zwischen dem Steuerhebel 53 und dem Antriebsteil 25. Um Letzteres zu realisieren, erfolgt die Verbindung vorzugsweise unter Zwischenschaltung eines im Bereich der zweiten Koppelstelle 55 an dem Steuerhebel 53 angeordneten Koppelgliedes 58, das zwischen zwei mit dem Antriebsteil 25 verbundene Kopplungsflächen 62 eingreift, die sich jeweils in Richtung der ersten Bewegungsachse 17 erstrecken und einander in Richtung der zweiten Bewegungsachse 18, mit einem dem Durchmesser des Koppelgliedes 58 entsprechenden Abstand, zugewandt sind. Das Koppelglied 58 ist insbesondere ein Rollenkörper, dessen Drehachse mit der zweiten Schwenkachse 57 zusammenfällt. Durch die Führung zwischen den beiden Kopplungsflächen 62 kann der Steuerhebel 53 an der zweiten Koppelstelle 55 nicht nur bezüglich dem Antriebsteil 25 verschwenkt werden, sondern auch noch eine durch einen Doppelpfeil angedeutete lineare Hubbewegung 63 in Richtung der ersten Bewegungsachse 17 ausführen.

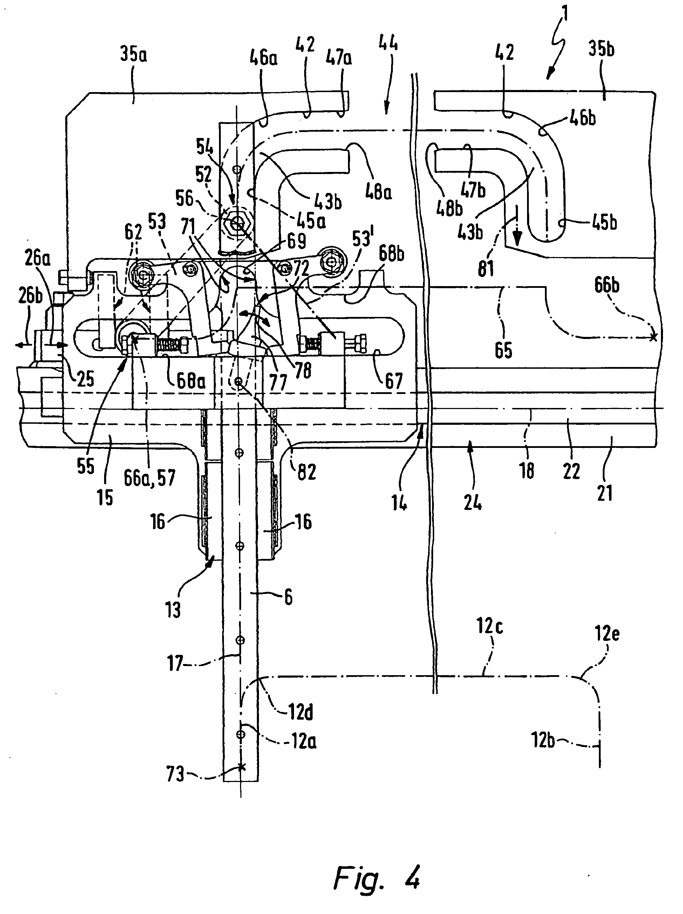

Mit dem Antriebsteil 25 ist ein Mitnehmer 64 verbunden, der zweckmäßigerweise im Bereich der zweiten Koppelstelle 55 angeordnet ist. Er kann in Abhängigkeit von der momentanen Axialposition des Antriebsteils 25 in und außer Mitnahmeeingriff mit dem Führungsschlitten 15 stehen, so dass das Antriebsteil 25 beim Durchlaufen einer Antriebsbewegung 26a bzw. 26b zeitweilig ohne Mitnahme des Führungsschlittens 15 und zeitweilig unter Mitnahme des Führungsschlittens 15 bewegbar ist. Die Antriebsbewegung 26a, 26b des Antriebsteils 25 ist dabei eine ständig mit der zweiten Bewegungsachse 18 gleichgerichtete Linearbewegung zwischen zwei Antriebsendpositionen, von denen die eine in Figur 4 abgebildet ist.

Die zweite Koppelstelle 55 ist so geführt, dass sie sich bei der Antriebsbewegung 26a bzw. 26b entlang einer an der Bahnvorgabekurve 42 vorbeilaufenden Steuerbahn 65 bewegt, die in Figur 4 strichpunktiert angedeutet ist und deren zwei Endpunkte 66a, 66b mit Bezug zur Richtung der zweiten Bewegungsachse 18 diesseits und jenseits der beiden linearen Kurvenendabschnitte 45a, 45b der Bahnvorgabekurve 42 liegen. Die Führung der zweiten Koppelstelle 55 geschieht vorzugsweise über den Mitnehmer 64, der hierzu als Steuerkurvenfolger ausgebildet ist und mit einer am Führungsschlitten 15 vorgesehenen Steuerkurve 67 in Eingriff steht. Hierzu ist der Mitnehmer 64 insbesondere als Rollenkörper ausgebildet, dessen Drehachse mit der zweiten Schwenkachse 57 zusammenfällt und der in einen die Steuerkurve 67 definierenden Führungsschlitz des Führungsschlittens 15 eingreift.

Die Steuerkurve 67 hat zwei gleichgerichtet mit der zweiten Bewegungsachse 18 verlaufende lineare Steuerkurven-Endabschnitte 68a, 68b, deren Längsachsen zusammenfallen und die in einer Kupplungszone 72 ineinander übergehen. In dieser Kupplungszone verfügt die Steuerkurve 67 außerdem über einen sich in Richtung der ersten Bewegungsachse 17 hin zum Bahnkurvenfolger 52 erstreckenden Zweigabschnitt 69, der beim Ausführungsbeispiel von einer Ausbauchung des Führungsschlitzes gebildet ist. Die Kupplungszone 72 wie auch der Zweigabschnitt 69 befinden sich in Richtung der zweiten Bewegungsachse 18 auf gleicher Höhe mit dem am Greiferträger 6 angeordneten Bahnkurverfolger 52. Die in Richtung der zweiten Bewegungsachse 18 orientierten Flanken des Zweigabschnittes 69 bilden eine Anschlagfläche 71 für den Mitnehmer 64.

Um einen Handhabungszyklus auszuführen, wird der Linearantrieb 24 so betätigt, dass das Antriebsteil 25 eine der beiden Antriebsbewegungen 26a, 26b ausführt. Der sich dabei einstellende Ablauf sei im Folgenden anhand der ausgehend von Figur 4 beginnenden ersten Antriebsbewegung 26a erläutert. Hier nimmt das Antriebsteil 25 zunächst eine Antriebsendstellung ein, wobei gleichzeitig der Mitnehmer 64 beabstandet zur Kupplungszone 72 mit dem ersten Steuerkurven-Endabschnitt 68a in Eingriff steht. Der Bahnkurvenfolger 52 befindet sich hierbei, auf Grund der entsprechend gewählten Steuerhebellänge, im ersten linearen Kurvenendabschnitt 45a am Ende der Bahnvorgabekurve 42. Der Greiferträger 6 nimmt hierbei die in Figur 4 durch ein Kreuz bei der Handhabungsbahn 5 markierte Anfangsstellung 73 ein.

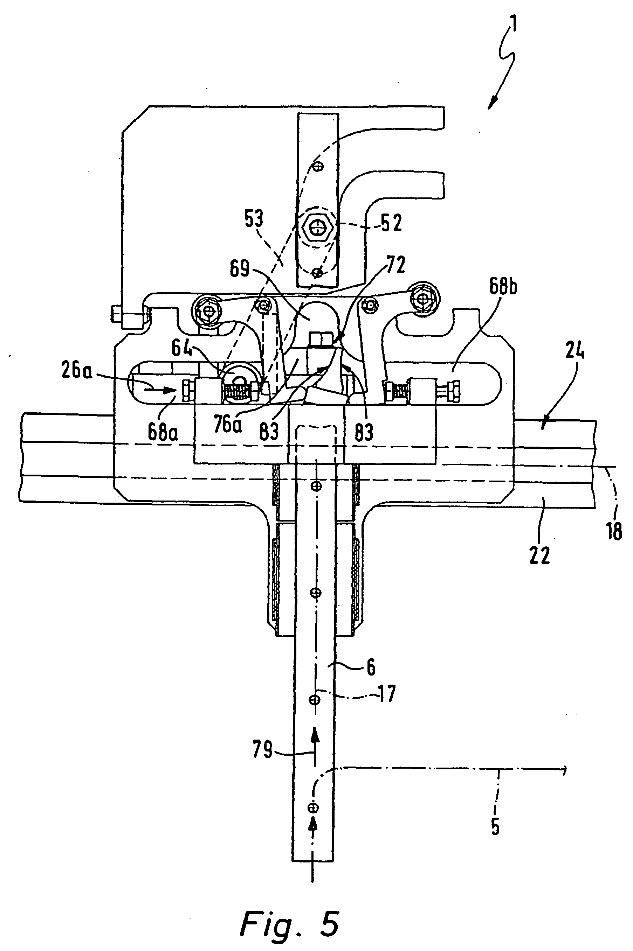

Während der sich nun anschließenden ersten Phase der ersten Antriebsbewegung 26a verlagert sich der Mitnehmer 64 relativ zu dem stillstehenden Führungsschlitten 15 in Richtung zur Kupplungszone 72, wobei gleichzeitig über den Steuerhebel 53 Schubkräfte auf den Greiferträger 6 ausgeübt werden, so dass dieser sich in einer ersten Richtung (Pfeil 79) entlang der ersten Bewegungsachse 17 verlagert, wobei gleichzeitig der Bahnkurvenfolger 52 in der Bahnvorgabekurve 42 in Richtung zum ersten Bogenabschnitt 46a verschoben wird. Eine entsprechende zweite Betriebsphase ist in Figur 5 angedeutet.

Beim weiteren Fortgang der ersten Antriebsbewegung 26a gelangt der Mitnehmer 64 im Bereich der Kupplungszone 72 derart in Mitnahmeingriff mit dem Führungsschlitten 15, dass er diesen bei seiner weiteren Linearbewegung mitnimmt. Der Mitnahmeeingriff beginnt, wenn der Bahnkurvenfolger 52 den ersten linearen Kurvenendabschnitt 45a verlässt und in den ersten Bogenabschnitt 46a übergeht. Somit wird der Führungsschlitten 15 durch den Mitnehmer 64 zu einer eigenen Linearbewegung in der gleichen Richtung wie die erste Antriebsbewegung 26a angetrieben.

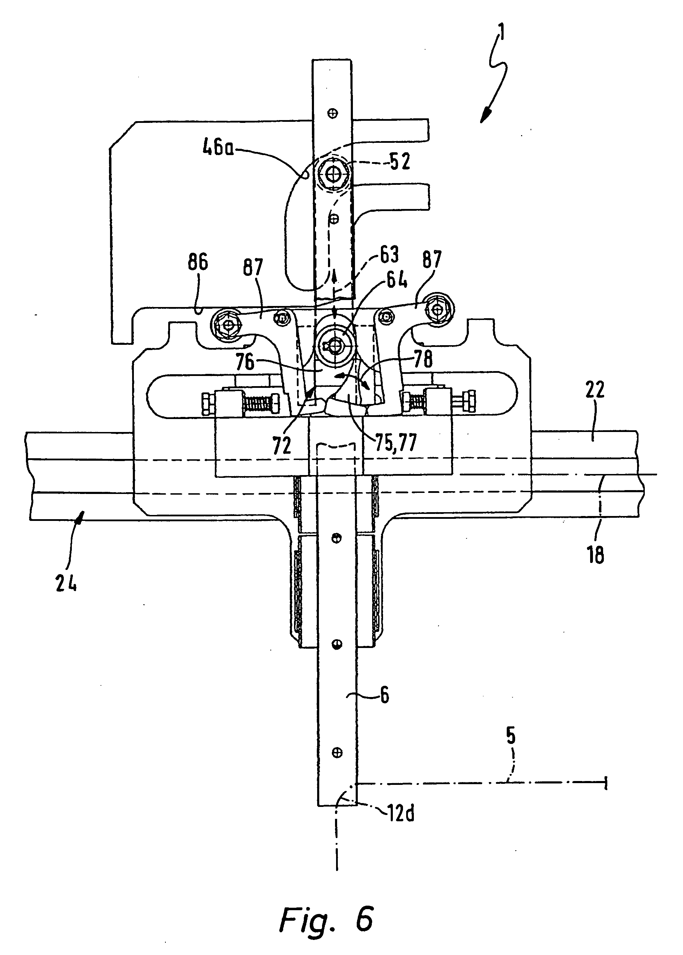

Bis der Bahnkurvenfolger 52 den ersten Bogenabschnitt 46a durchlaufen hat, führt der Mitnehmer 64 relativ zu dem Führungsschlitten 15 und zu dem Antriebsteil 25 eine überlagerte Bewegung in Richtung der ersten Bewegungsachse 17 aus, wobei es sich um die eingangs erläuterte lineare Hubbewegung 63 handelt. Eine entsprechende dritte Betriebsphase ist in Figur 6 illustriert. Der Greiferträger 6 durchläuft dabei den ersten Bogenabschnitt 12d der Handhabungsbahn 5.

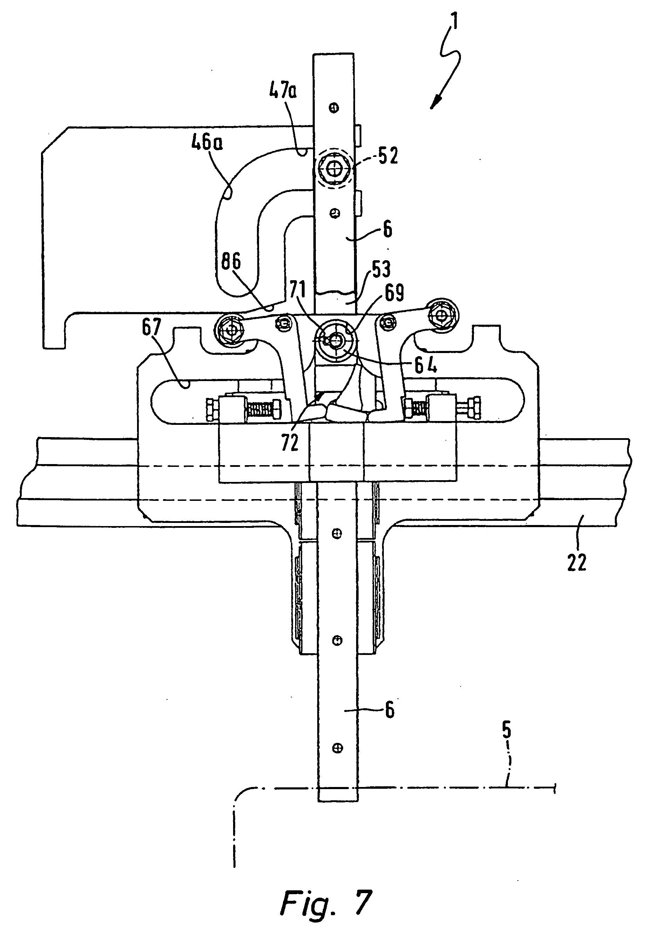

Die rechtwinkelig zur zweiten Bewegungsachse 18 gerichtete Hubbewegung 63 des Mitnehmers 64 endet, wenn der Bahnkurvenfolger 52 den ersten Bogenabschnitt 46a verlassen hat und in den sich anschließenden ersten linearen Fortsetzungsabschnitt 47a übergegangen ist. In dieser aus Figur 7 ersichtlichen vierten Betriebsphase ist der Mitnehmer 64 im Zweigabschnitt 69 der Steuerkurve 67 angelangt und ist darin in Richtung der zweiten Bewegungsachse 18 formschlüssig fixiert.

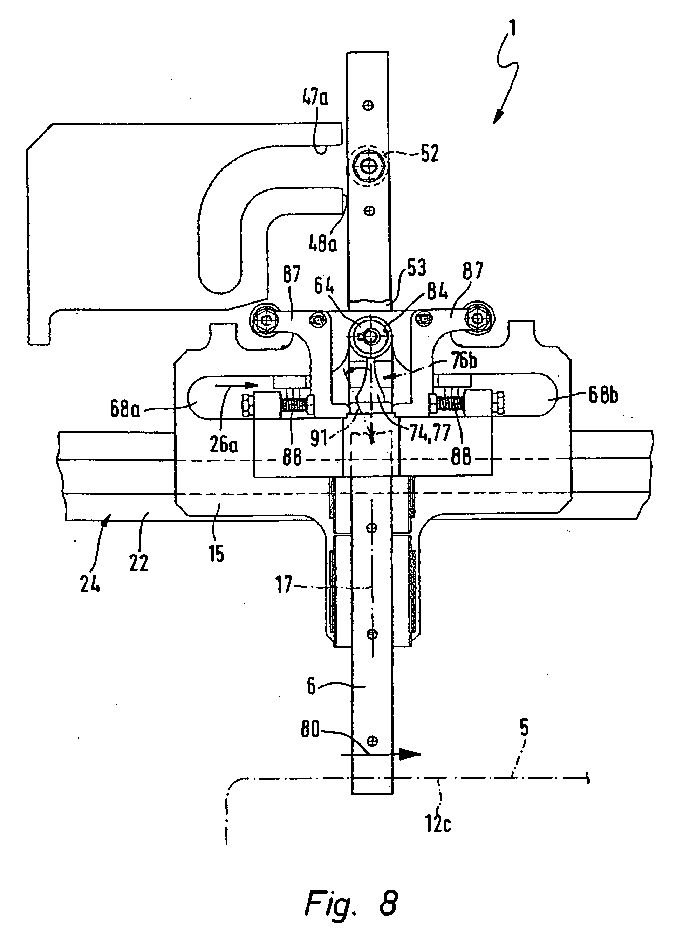

Setzt sich nun die erste Antriebsbewegung 26a fort, tritt in einer aus Figur 8 ersichtlichen fünften Betriebsphase der Bahnkurvenfolger 52 aus dem ersten Fortsetzungsabschnitt 47a aus und bewegt sich von da an in dem als Lücke 44 bezeichneten unterbrochenen Bereich der Bahnvorgabekurve 42. Indem gleichzeitig der Mitnehmer 64 durch Abstützmittel 74 in der mit dem Zweigabschnitt 69 zusammenwirkenden Eingriffsstellung fixiert ist, bleibt die Position des Greiferträgers 6 in Richtung der ersten Bewegungsachse 17 konstant und der Greiferträger 6 durchläuft den linearen Bahn-Zwischenabschnitt 12c auch ohne Führung des Bahnkurvenfolgers 52 in der Bahnvorgabekurve 42 (Pfeil 80).

Die Bewegung setzt sich alsdann fort, bis der Bahnkurvenfolger 52 über den ihm in Richtung der zweiten Bewegungsachse 18 gegenüberliegenden Mündungsbereich 48b in die zweite Bahnkurvensektion 43b eintritt, wo nun ein umgekehrter Bewegungsablauf wie beim Durchlaufen der ersten Bahnkurvensektion 43b stattfindet. Der Steuerhebel 53 schwenkt weiter, wobei die zweite Koppelstelle 55 und somit auch der Mitnehmer die erste Bewegungsachse 17 überquert bzw. kreuzt, so dass anstelle von Schubkräften nun Zugkräfte auf den Greiferträger 6 einwirken. Taucht schließlich der Bahnkurvenfolger 52 in den zweiten linearen Kurvenendabschnitt 45b ein, ist gleichzeitig ein Zustand erreicht, bei dem der Mitnahmeeingriff zwischen Mitnehmer 64 und Führungsschlitten 15 vollständig aufgehoben ist und somit nurmehr wieder eine reine Linearbewegung des Greiferträgers 6 in Richtung der ersten Bewegungsachse 17 stattfindet, nun allerdings in entgegengesetztem Richtungssinne als beim Durchlaufen des ersten linearen Kurvenabschnittes 45a (Strichpunktierter Pfeil 81).

Hat schließlich das Antriebsteil 25 seine zweite Antriebsendposition erreicht, befindet sich der Mitnehmer 64 in dem in Figur 4 markierten zweiten Endpunkt 66b der Steuerbahn 65 und der Steuerhebel 53 nimmt die in Figur 4 strichpunktiert bei 53' angedeutete Stellung ein, in der er sich im Vergleich zum Ausgangszustand auf der entgegengesetzten Längsseite der ersten Bewegungsachse 17 befindet.

Es kann sich nun mit vergleichbarem Bewegungsablauf ein zweiter Handhabungszyklus anschließen, bei dem der Greiferträger 6 in die aus Figur 4 ersichtliche Ausgangsstellung zurückkehrt. Hierzu ist lediglich das Antriebsteil 25 zu der zweiten Antriebsbewegung 26b zu veranlassen.

Obgleich es prinzipiell möglich wäre, die Bahnvorgabekurve 42 auch im Bereich der Lücke 44 zu schließen und mit einem entsprechenden linearen Bahnabschnitt zu versehen, macht das Ausführungsbeispiel gut deutlich, dass eine hier geschlossene Bahnvorgabekurve nicht notwendig ist, was es sehr einfach macht, den Umpositionierabstand durch Verändern der Relativlage der beiden Bahnkurvensektionen 43a, 43b zu variieren. Man kann dadurch die Länge des Bahnzwischenabschnittes 12c der Handhabungsbahn 5 sehr leicht an unterschiedliche Gegebenheiten anpassen.

Um dem Mitnehmer 64 einen problemlosen Übergang zwischen den Steuerkurven-Endabschnitten 68a, 68b und dem Zweigabschnitt 69 zu ermöglichen, ist der Führungsschlitten 15 im Bereich der Kupplungszone 72 mit Umlenkmitteln 75 ausgestattet. Diese ragen in den Verfahrweg des Mitnehmers 64 und leiten diesen in die gewünschte Richtung.

Korrespondierend mit den beiden Bogenabschnitten 46a, 46b sind die Umlenkmittel 75 so ausgebildet, dass sie einen bogenförmigen Übergangsbereich 76 zwischen einem jeweiligen Steuerkurven-Endabschnitt 68a, 68b und dem Zweigabschnitt 69 definieren. Die Umlenkmittel 75 enthalten hierzu zweckmäßigerweise ein Weichenelement 77, das um eine zu den beiden Schwenkachsen 56, 57 parallele Schwenkachse 82 gemäß Doppelpfeil 78 verschwenkbar ist. Das Weichenelement 77 ragt von der dem Zweigabschnitt 69 entgegengesetzten Längsseite her zwischen die beiden Steuerkurven-Endabschnitte 68a, 68b hinein und hat an beiden einem jeweiligen Steuerkurven-Endabschnitt 68a, 68b zugewandten Seiten je eine bogenförmige Umlenkfläche 83. Damit der Mitnehmer 64 aus dem ersten Steuerkurven-Endabschnitt 68a in den Zweigabschnitt 69 übertreten kann, wird das Weichenelement 77 in der aus Figuren 4 bis 7 ersichtlichen ersten Umlenkstellung positioniert, in der ihre dem ersten Steuerkurven-Endabschnitt 68a zugewandte Umlenkfläche 83 einen ersten bogenförmigen Übergangsbereich 76a der Steuerkurve 67 definiert. Es ergibt sich dadurch ein bogenförmiger Übergang zwischen dem ersten Steuerkurven-Endabschnitt 68a und dem Zweigabschnitt 69.

Damit der Mitnehmer 64 den Zweigabschnitt 69 in Richtung zum zweiten Steuerkurven-Endabschnitt 68b verlassen kann, wird das Weichenelement 77 zur entgegengesetzten Seite verschwenkt, so dass es eine zweite Umlenkstellung einnimmt (in Figur 8 bei 91 angedeutet), in der sie einen zweiten bogenförmigen Übergangsbereich 76b, nun zwischen dem Zweigabschnitt 69 und dem zweiten Steuerkurven-Endabschnitt 68b, freigibt.

Während sich der Mitnehmer 64 vollständig innerhalb des Zweigabschnittes 69 befindet, fungieren die Begrenzungsflächen des Zweigabschnittes 69 als Anschlagfläche 71, die in Kooperation mit dem Mitnehmer 64 den gewünschten Mitnahmeeingriff gewährleistet. Während des Überganges von einem Steuerkurven-Endabschnitt in den Zweigabschnitt 69 fungiert aber auch die in diesem Moment wirksame Umlenkfläche 83 als Anschlagfläche, um bereits beim Durchlaufen eines bogenförmigen Übergangsbereiches 76 für eine Mitnahme des Führungsschlittens 15 zu sorgen, so dass sich überlagernde Linearbewegungen einstellen, die dem Bahnkurvenfolger 52 das Hindurchlaufen durch die Bogenabschnitte 46a, 46b der Bahnvorgabekurve 42 ermöglichen.

Während sich der Bahnkurvenfolger 52 außer Eingriff mit der Bahnvorgabekurve 42 befindet, nimmt das Weichenelement 77 die aus Figur 8 ersichtliche Zwischenstellung ein, in der es den in Eingriffsstellung mit dem Zweigabschnitt 69 befindlichen Mitnehmer 64 untergreift, so dass dieser zwischen dem Ende und den Flanken des Zweigabschnittes 69 und der Spitze des Weichenelements 77 festgehalten ist. Dadurch wird die momentane Position des Greiferträgers 6 in Richtung der ersten Bewegungsachse 17 fixiert, mit dem Resultat, dass der Bahnkurvenfolger 52 und mithin auch der Greiferträger 6 beim Übergang zwischen den beiden einander zugewandten, beabstandeten Mündungsbereichen 48a, 48b in einem konstanten Abstand zur zweiten Bewegungsachse 18 gehalten wird.

Die jeweilige Schwenkposition des Weichenelements 77 und somit die Weichenstellung wird durch Betätigungsmittel 85 in Abhängigkeit von der Schlittenposition vorgegeben. Hierzu arbeiten die Betätigungsmittel 85 zweckmäßigerweise mit einer bezüglich dem Schlittenträger 21 ortsfesten Stellungsgeberkurve 86 zusammen.

Beim Ausführungsbeispiel umfassen die Betätigungsmittel 85 zwei schwenkbar gelagerte Betätigungshebel 87, die jeweils einenends das verschwenkbare Weichenelement 77 beaufschlagen und andernends, insbesondere über drehbar gelagerte Rollkörper, mit der Stellungsgeberkurve 86 in Kontakt stehen.

Durch Federmittel 88 sind die Betätigungshebel 87 so vorgespannt, dass sie das Weichenelement 77 in der aus Figur 8 ersichtlichen Zwischenstellung zentrieren, solange der Greiferträger 6 den Bahn-Zwischenabschnitt 12a durchläuft. Es ist insbesondere vorgesehen, dass in dieser Phase die Betätigungshebel 87 komplett außer Eingriff mit der Stellungsgeberkurve 86 stehen, die vorzugsweise über zwei Kurvenabschnitte verfügt, welche sich an den beiden Bahnkurventrägern 35a, 35b befinden.

Nähert sich der Führungsschlitten 15 einer Endlage, gelangt der vorauseilende Betätigungshebel 87 in Kontakt mit dem zugeordneten Kurvenabschnitt der Stellungsgeberkurve 86 und wird so verschwenkt, dass er auf das Weichenelement 77 einwirkt und dieses in die gewünschte Weichenstellung verbringt.

Dabei wird der andere Betätigungshebel 87 entgegen der Federkraft zurückgedrängt.

Bei Bedarf kann das Handhabungsgerät 1 mit Stoßdämpfmitteln 89 ausgestattet werden, die für ein kontrolliertes Abbremsen der bewegten Komponenten in den jeweiligen Endlagen sorgen.

## Patentansprüche

1. Handhabungsgerät zum Umpositionieren von Teilen, mit einem zum Tragen eines Greifers (7) dienenden, entlang einer zwei zueinander parallele lineare Endabschnitte (12a, 12b) aufweisenden U-förmigen Handhabungsbahn (5) verlagerbaren Greiferträger (6), der über erste Linearführungsmittel (13) relativ zu einem Führungsschlitten (15) entlang einer ersten Bewegungsachse (17) linear verstellbar geführt ist, der seinerseits über zweite Linearführungsmittel (14) relativ zu einem Schlittenträger (21) entlang einer zu der ersten Bewegungsachse (17) rechtwinkeligen zweiten Bewegungsachse (18) verstellbar geführt ist, wobei der Greiferträger (6) mit einem Bahnkurvenfolger (52) verbunden ist, der mit einer zumindest einen Teil des gewünschten Verlaufes der Handhabungsbahn (5) definierenden, bezüglich dem Schlittenträger (21) ortsfesten Bahnvorgabekurve (42) in Eingriff steht, die zwei in Richtung der zweiten Bewegungsachse (18) zueinander beabstandete und jeweils mit der ersten Bewegungsachse (17) gleichgerichtete erste und zweite lineare Kurvenendabschnitte (45a, 45b) aufweist, und wobei ein Steuerhebel (53) vorhanden ist, der an einer ersten Koppelstelle (54) bezüglich einer ersten Schwenkachse (56) verschwenkbar mit dem Greiferträger (6) verbunden ist und an einer zu der ersten Koppelstelle (54) beabstandeten zweiten Koppelstelle (55) mit einem Antriebsteil (25) verbunden ist, das zwischen zwei Antriebsendpositionen eine Antriebsbewegung (26a, 26b) ausführen kann, um die Verlagerung des Greiferträgers (6) entlang der Handhabungsbahn (5) hervorzurufen, **dadurch gekennzeichnet,**
- **dass** der Steuerhebel (53) an der ersten Koppelstelle (54) radial bezüglich der ersten Schwenkachse (56) allseits schub- und zugfest mit dem Greiferträger (6) bewegungsgekoppelt ist,
- **dass** die Antriebsbewegung (26a, 26b) des Antriebsteils (25) eine ständig mit der zweiten Bewegungsachse (18) gleichgerichtete Linearbewegung ist, wobei der Steuerhebel (53) an der zweiten Koppelstelle (55) bezüglich einer zu der ersten Schwenkachse (56) parallelen zweiten Schwenkachse (57) verschwenkbar und zugleich zumindest in Richtung der zweiten Bewegungsachse (18) schub- und zugfest mit dem Antriebsteil (25) verbunden ist,
- und **dass** ein in lösbaren Mitnahmeeingriff mit dem Führungsschlitten (15) bringbarer Mitnehmer (64) an dem Steuerhebel (53) angeordnet ist, wobei der Mitnehmer (64) so geführt ist, dass sich die zweite Koppelstelle (55) bei der Antriebsbewegung (26a, 26b) entlang einer an der Bahnvorgabekurve (42) vorbeilaufenden Steuerbahn (65) bewegt, deren zwei Endpunkte (66a, 66b) mit Bezug zur Richtung der zweiten Bewegungsachse (18) diesseits und jenseits der beiden linearen Kurvenendabschnitte (45a, 45b) der Bahnvorgabekurve (42) liegen, und wobei der Mitnehmer (64), im Laufe der Antriebsbewegung (26a, 26b) zunächst in und dann wieder außer Mitnahmeingriff mit dem Führungsschlitten (15) gelangt, wenn der Bahnkurvenfolger (52) den einen linearen Kurvenendabschnitt der Bahnvorgabekurve (42) verlässt bzw. in den anderen linearen Kurvenendabschnitt der Bahnvorgabekurve (42) eintritt, wobei die zweite Koppelstelle (55) auf Grund des bezüglich der ersten Schwenkachse (56) verschwenkenden Steuerhebels (53) die erste Bewegungsachse (17) überquert.

2. Handhabungsgerät nach Anspruch 1, **dadurch gekennzeichnet, dass** der Mitnehmer (64) im Bereich der zweiten Koppelstelle (55) angeordnet ist.

3. Handhabungsgerät nach Anspruch 2, **dadurch gekennzeichnet, dass** der Mitnehmer (64) einen Steuerkurvenfolger bildet und mit einer am Führungsschlitten (15) vorgesehenen Steuerkurve (67) in Eingriff steht, die zwei gleichgerichtet mit der zweiten Bewegungsachse (18) verlaufende lineare Steuerkurven-Endabschnitte (68a, 68b) aufweist, die in einer mit Bezug auf die Richtung der zweiten Bewegungsachse (18) auf gleicher Höhe mit dem Bahnkurvenfolger (52) liegenden Kupplungszone (72) ineinander übergehen, in der sich mindestens eine den vorübergehenden Mitnahmeeingriff des Mitnehmers (64) ermöglichende, von dem Mitnehmer (64) beaufschlagbare Anschlagfläche (84, 83) befindet.

4. Handhabungsgerät nach Anspruch 3, **dadurch gekennzeichnet, dass** die Steuerkurve (67) in der Kupplungszone (72) einen sich quer zur zweiten Bewegungsachse (18) in Richtung zum Bahnkurvenfolger (52) erstreckenden Zweigabschnitt (69) aufweist, dessen in Richtung der zweiten Bewegungsachse (18) weisende Fläche die mindestens eine Anschlagfläche (71) bildet und in die der Mitnehmer (64), gelenkt durch am Führungsschlitten (15) angeordnete Umlenkmittel (75), beim Durchlaufen der Kupplungszone (72) vorübergehend formschlüssig eingreift.

5. Handhabungsgerät nach Anspruch 4, **dadurch gekennzeichnet, dass** sich an die linearen Kurvenendabschnitte (45a, 45b) jeweils ein sich zum jeweils anderen Kurvenendabschnitt hin krümmender Bogenabschnitt (46a, 46b) der Bahnvorgabekurve (42) anschließt, wobei die der Steuerkurve (67) zugeordneten Umlenkmittel (75) einen bogenförmigen Übergangsbereich (76) zwischen einem jeweiligen Steuerkurven-Endabschnitt (68a, 68b) und dem Zweigabschnitt (69) definieren.

6. Handhabungsgerät nach Anspruch 5, **dadurch gekennzeichnet, dass** die Umlenkmittel (75) ein verschwenkbares Weichenelement (77) beinhalten, das zwischen die beiden Steuerkurven-Endabschnitte (68a, 68b) hineinragt und das an den den Steuerkurven-Endabschnitten (68a, 68b) zugewandten Seiten jeweils eine bogenförmige Umlenkfläche (83) aufweist, die bei entsprechender Weichenstellung den ankommenden Mitnehmer (64) in Richtung zum Zweigabschnitt (69) leitet.

7. Handhabungsgerät nach Anspruch 6, **dadurch gekennzeichnet, dass** an dem Weichenelement (77) Betätigungsmittel (85) angreifen, die beim Verlagern des Führungsschlittens (15) in Abhängigkeit von der Schlittenposition die Weichenstellung hervorrufen.

8. Handhabungsgerät nach Anspruch 7, **dadurch gekennzeichnet, dass** die Betätigungsmittel (85) zur Steuerung der Weichenstellung mit einer bezüglich dem Schlittenträger (21) ortsfesten Stellungsgeberkurve (86) zusammenarbeiten.

9. Handhabungsgerät nach einem der Ansprüche 4 bis 8, **dadurch gekennzeichnet, dass** Abstützmittel (74) vorhanden sind, die den Mitnehmer (64) in der mit dem Zweigabschnitt (69) zusammenwirkenden Eingriffsstellung fixieren.

10. Handhabungsgerät nach Anspruch 9 in Verbindung mit einem der Ansprüche 6 bis 8, **dadurch gekennzeichnet, dass** die Abstützmittel (74) von dem Weichenelement (77) gebildet sind, das in einer den in Eingriffsstellung befindlichen Mitnehmer (64) untergreifenden und dabei abstützenden Zwischenstellung positionierbar ist.

11. Handhabungsgerät nach Anspruch 9 oder 10, **dadurch gekennzeichnet, dass** die Bahnvorgabekurve (42) zwei jeweils einen der linearen Kurvenendabschnitte (45a, 45b) und den sich daran anschließenden Bogenabschnitt (46a, 46b) aufweisende Bahnkurvensektionen (43a, 43b) aufweist, die über einander zugewandte und in Richtung der zweiten Bewegungsachse (18) miteinander fluchtende Mündungsbereiche (48a, 48b) verfügen, die unter Bildung einer die Bahnvorgabekurve (42) unterbrechenden Lücke (44) mit Abstand zueinander angeordnet sind, wobei der Bahnkurvenfolger (52) durch den in der Eingriffsstellung fixierten Mitnehmer (64) beim Übergang zwischen den beiden beabstandeten Mündungsbereichen (48a, 48b) in einem konstanten Abstand zur zweiten Bewegungsachse (18) gehalten wird.

12. Handhabungsgerät nach Anspruch 11, **dadurch gekennzeichnet, dass** die Bahnkurvensektionen (43a, 43b) in Richtung der zweiten Bewegungsachse (18) mit variablem Abstand relativ zueinander positionierbar sind, so dass die Länge eines sich zwischen den linearen Bahn-Endabschnitten (12a, 12b) der U-förmigen Handhabungsbahn (5) erstreckenden Bahn-Zwischenabschnittes (12c) in veränderbarer Weise vorgebbar ist.

13. Handhabungsgerät nach Anspruch 12, **dadurch gekennzeichnet, dass** die Bahnkurvensektionen (43a, 43b) jeweils an einem in Richtung der zweiten Bewegungsachse (18) verstellbar mit dem Schlittenträger (21) verbundenen Bahnkurventräger (35a, 35b) vorgesehen sind.

14. Handhabungsgerät nach einem der Ansprüche 1 bis 13, **dadurch gekennzeichnet, dass** das Antriebsteil (25) Bestandteil eines durch Fluidkraft oder elektrisch betätigbaren Linearantriebes (24) ist.

15. Handhabungsgerät nach Anspruch 14, **dadurch gekennzeichnet, dass** das Antriebsteil (25) vom Abtriebsteil eines kolbenstangenlosen Linearantriebes, insbesondere eines sogenannten Schlitzzylinders, gebildet ist.

16. Handhabungsgerät nach Anspruch 14 oder 15, **dadurch gekennzeichnet, dass** der Schlittenträger (21) vom Gehäuse des Linearantriebes (24) gebildet ist.

## Claims

1. Handling device for repositioning components, with a gripper carrier (6) used to support a gripper (7) and displaceable along a U-shaped handling path (5) with two parallel linear end sections (12a, 12b), which is guided for linear adjustment along a first movement axis (17) via first linear guide means (13) relative to a guide block (15), which is in turn guided for movement along a second movement axis (18) extending at right angles to the first movement axis (17) via second linear guide means (14) relative to a block support (21), wherein the gripper carrier (6) is connected to a path curve follower (52) in engagement with a path presetting curve (42) defining at least a part of the desired course of the handling path (5) and being stationary relative to the block support (21) and having first and second linear curve end sections (45a, 45b) located at a distance from one another in the direction of the second movement axis (18), their orientation corresponding to the first movement axis (17), and wherein a control lever (53) is provided, which is connected to the gripper carrier (6) at a first coupling point (54) for pivoting about a first pivoting axis (56) and is, at a second coupling point (55) lying at a distance from the first coupling point (54), connected to a drive part (25) capable of performing a drive movement (26a, 26b) between two drive end positions in order to cause the displacement of the gripper carrier (6) along the handling path (5), **characterised in that**
- the control lever (53) is coupled for movement with the gripper carrier (6) in a push- and pull-resisting manner at the first coupling point (54) radially relative to the first pivoting axis (54),
- **in that** the drive movement (26a, 26b) of the drive part (25) is a linear movement in permanent alignment with the second movement axis (12), wherein the control lever (53) is, at the second coupling point (55), pivotable relative to a second pivoting axis (57) parallel to the first pivoting axis (56) while being connected to the drive part (25) in a push- and pull-resisting manner in the direction of the second movement axis (18), and
- **in that** a driver (64) capable of being brought into releasable engagement with the guide block (15) is located on the control lever (53), wherein the driver (64) is guided such that the second coupling point (55) moves, in the course of the drive movement (26a, 26b), along a control path (65) running past the path presetting curve (42), its two end points (66a, 66b) lying on either side of the two linear curve end sections (45a, 45b) of the path presetting curve (42) relative to the direction of the second movement axis (18), and wherein the driver (64), in the course of the drive movement (26a, 26b), comes first into and then out of driving engagement with the guide block (15), if the path curve follower (52) leaves the one linear curve end section of the path presetting curve (42) and enters the other linear curve end section of the path presetting curve (42), wherein the second coupling point (55), as a result of the pivoting of the control lever (53) relative to the first pivoting axis (56), crosses the first movement axis (17).

2. Handling device according to claim 1, **characterised in that** the driver (64) is located in the area of the second coupling point (55).

3. Handling device according to claim 2, **characterised in that** the driver (64) forms a control curve follower and is in engagement with a control curve (67) on the guide block (15), which has two linear control curve end sections (68a, 68b) extending in the direction of the second movement axis (18) and merging into one another in a coupling zone (72) located at the same level as the path curve follower (52) relative to the direction of the second movement axis (18), which zone contains at least one stop surface (84, 83) allowing the temporary driving engagement of the driver (64) and being acted on by the driver (64).

4. Handling device according to claim 3, **characterised in that** the control curve (67) includes in the coupling zone (72) a branch section (69) extending at right angles to the second movement axis (18) towards the path curve follower (52), its surface pointing towards the second movement axis (18) forming the at least one stop surface (71), the driver (64), steered by deflection means (75) located on the guide block (15), coming into temporary positive engagement therewith while passing through the coupling zone (72).

5. Handling device according to claim 4, **characterised in that** each linear curve end section (45a, 45b) is adjoined by an arc section (46a, 46b) of the path presetting curve (42), which curves towards the other curve end section, the deflection means (75) assigned to the control curve (67) defining a curved transition area (76) between each control curve end section (68a, 68b) and the branch section (69).

6. Handling device according to claim 5, **characterised in that** the deflection means (75) comprise a pivotable switch element (77), which projects between the two control curve end sections (68a, 68b) and features a curved deflection surface (83) on each of the sides facing the control curve end sections (68a, 68b) to direct the approaching driver (64) towards the branch section (69) in a suitable switch position.

7. Handling device according to claim 6, **characterised in that** the switch element (77) is acted on by operating means (85) determining the switch position in dependence on the block position as the guide block (15) is displaced.

8. Handling device according to claim 7, **characterised in that** the operating means (85) act together with a position transmitter curve (86) stationary relative to the block support (21) to control the switch position.

9. Handling device according to any of claims 4 to 8, **characterised in that** supporting means (74) are provided to fix the driver (64) in the engaged position acting together with the branch section (69).

10. Handling device according to claim 9 in conjunction with any of claims 6 to 8, **characterised in that** the supporting means (74) are represented by the switch element (77), which can be placed in an intermediate position in which it engages the engaged driver (64) from below while supporting it.

11. Handling device according to claim 9 or 10, **characterised in that** the path presetting curve (42) comprises two path curve sections (43a, 43b), each consisting of one of the linear curve end sections (45a, 45b) and an adjoining arc section (46a, 46b) and having opening areas (48a, 48b) facing one another and in alignment with one another in the direction of the second movement axis (18), which are arranged at a distance from one another while forming a gap (44) interrupting the path presetting curve (42), wherein the path curve follower (52) is held at a constant distance from the second movement axis (18) by the driver (64) fixed in the engaged position during the transition between the two spaced opening areas (48a, 48b).

12. Handling device according to claim 11, **characterised in that** the path curve sections (43a, 43b) can be positioned at variable relative distances in the direction of the second movement axis (18), so that the length of a path intermediate section (12c) extending between the linear path end sections (12a, 12b) of the U-shaped handling path (5) can be preset in a variable manner.

13. Handling device according to claim 12, **characterised in that** each of the path curve sections (43a, 43b) is located on a path curve support (35a, 35b) joined to the block support (21) for adjustment in the direction of the second movement axis (18).

14. Handling device according to any of claims 1 to 13, **characterised in that** the drive part (25) is part of a hydraulically or electrically operated linear drive (24).

15. Handling device according to claim 14, **characterised in that** the drive part (24) is represented by the driven part of a rodless linear drive, in particular of a so-called slotted cylinder.

16. Handling device according to claim 14 or 5, **characterised in that** the block support (21) is represented by the housing of the linear drive (24).

## Revendications

1. Dispositif de manipulation destiné à amener des pièces dans d'autres positions, comportant un porte-pince (6), qui est destiné à porter une pince (7) et est apte à se déplacer le long d'une trajectoire de manipulation (5) en forme de U avec deux parties d'extrémité linéaires (12a, 12b) parallèles entre elles, et qui est guidé de manière déplaçable linéairement par l'intermédiaire de premiers moyens de guidage linéaires (13) par rapport à un chariot de guidage (15) le long d'un premier axe de déplacement (17), lequel, pour sa part, est guidé de manière déplaçable par l'intermédiaire de deuxièmes moyens de guidage linéaires (14) par rapport à un porte-chariot (21) le long d'un deuxième axe de déplacement (18), perpendiculaire au premier axe de déplacement (17), le porte-pince (6) étant relié à un suiveur de courbe (52), qui est en prise avec une courbe de définition de voie (42), laquelle définit une partie du trajet souhaité de la trajectoire de manipulation (5) et est fixe par rapport au porte-chariot (21) et laquelle comporte deux première et deuxième parties d'extrémité (45a, 45b), écartées l'une de l'autre dans la direction du deuxième axe de déplacement (18) et orientées chacune dans le même sens que le premier axe de déplacement (17), et un levier de commande (53) étant prévu, lequel est lié au porte-pince (6) de manière à pouvoir pivoter au niveau d'un premier point de couplage (54) par rapport à un premier axe de pivotement (56) et est assemblé, au niveau d'un deuxième point de couplage (55) écarté du premier point de couplage (54), à un élément d'entraînement (25) qui peut effectuer un mouvement d'entraînement (26a, 26b) entre deux positions finales d'entraînement, afin d'induire le déplacement du porte-pince (6) le long de la trajectoire de manipulation (5), **caractérisé**
- **en ce que** le levier de commande (53) au niveau du premier point de couplage (54) est couplé de manière à effectuer un mouvement solidaire en poussée et en traction avec le porte-pince (6), dans le sens radial par rapport au premier axe de pivotement (56),
- **en ce que** le mouvement d'entraînement (26a, 26b) de l'élément d'entraînement (25) est un mouvement linéaire dirigé en permanence dans le même sens que le deuxième axe de déplacement (18), le levier de commande (53), au niveau du deuxième point de couplage (55), étant lié à l'élément d'entraînement (25) de manière pivotante par rapport à un deuxième axe de pivotement (57) parallèle au premier axe de pivotement (56) et, en même temps, de manière solidaire en poussée et en traction au moins dans la direction du deuxième axe de déplacement (18),
- et **en ce qu'**un entraîneur (64), pouvant être amené en prise d'entraînement amovible avec le chariot de guidage (15), est disposé sur le levier de commande (53), l'entraîneur (64) étant guidé de telle sorte que le deuxième point de couplage (55), lors du mouvement d'entraînement (26a, 26b), se déplace le long d'une trajectoire de commande (65) qui passe le long de la courbe de définition de voie (42) et dont les deux points d'extrémité (66a, 66b) sont situés, par rapport à la direction du deuxième axe de déplacement (18), de part et d'autre des deux parties d'extrémité linéaires (45a, 45b) de la courbe de définition de voie (42), et l'entraîneur (64), au cours du mouvement d'entraînement (26a, 26b), parvient d'abord en prise d'entraînement, puis à nouveau hors de prise d'entraînement avec le chariot de guidage (15) lorsque respectivement le suiveur de courbe (52) quitte la partie d'extrémité linéaire de la courbe de définition de voie (42) ou entre dans l'autre partie d'extrémité linéaire de la courbe de définition de voie (42), le deuxième point de couplage (55) croisant le premier axe de déplacement (17) sous l'effet du pivotement du levier de commande (53) par rapport au premier axe de pivotement (56).

2. Dispositif de manipulation selon la revendication 1, **caractérisé en ce que** l'entraîneur (64) est disposé dans la zone du deuxième point de couplage (55).

3. Dispositif de manipulation selon la revendication 2, **caractérisé en ce que** l'entraîneur (64) forme un suiveur de courbe de commande et est en prise avec une courbe de commande (67), qui est prévue sur le chariot de guidage (15) et qui comporte deux parties d'extrémité linéaires (68a, 68b), qui sont orientées dans le même sens que le deuxième axe de déplacement (18) et qui se prolongent l'une dans l'autre dans une zone de couplage (72) qui, par rapport à la direction du deuxième axe de déplacement (18), est située à la même hauteur que le suiveur de courbe (52) et dans laquelle se situe au moins une surface de butée (84, 83) permettant la prise d'entraînement temporaire de l'entraîneur (64) et étant apte à être sollicitée par l'entraîneur (64).

4. Dispositif de manipulation selon la revendication 3, **caractérisé en ce que** la courbe de commande (67) dans la zone de couplage (72) comporte une partie de dérivation (69), qui s'étend perpendiculairement au deuxième axe de déplacement (18) vers le suiveur de courbe (52) et dont la surface orientée vers le deuxième axe de déplacement (18) forme ladite au moins une surface de butée (71) et dans laquelle s'engage temporairement par conjugaison de forme l'entraîneur (64) lorsque celui-ci, guidé par des moyens de déviation (75) disposés sur le chariot de guidage (15), franchit la zone de couplage (72).

5. Dispositif de manipulation selon la revendication 4, **caractérisé en ce que** les parties d'extrémité linéaires (45a, 45b) se prolongent chacune par une partie courbe (46a, 46b) de la courbe de définition de voie (42), courbée respectivement vers l'autre partie d'extrémité, les moyens de déviation (75), associés à la courbe de commande (67), définissant une zone de transition (76) courbe entre une partie d'extrémité (68a, 68b) respective de la courbe de commande et la partie de dérivation (69).

6. Dispositif de manipulation selon la revendication 5, **caractérisé en ce que** les moyens de déviation (75) comportent un élément d'aiguillage (77) pivotant, qui s'engage entre les deux parties d'extrémité (68a, 68b) de la courbe de commande et qui comporte, sur les côtés orientés vers les parties d'extrémité (68a, 68b) de la courbe de commande, respectivement une surface de déviation (83) courbe qui, dans une position d'aiguillage correspondante, guide l'entraîneur (64) arrivant vers la partie de déviation (69).

7. Dispositif de manipulation selon la revendication 6, **caractérisé en ce que** des moyens d'actionnement (85) entrent en contact avec l'élément d'aiguillage (77), lesquels, lors du déplacement du chariot de guidage (15), induisent la position d'aiguillage en fonction de la position du chariot.

8. Dispositif de manipulation selon la revendication 7, **caractérisé en ce que**, en vue de commander la position d'aiguillage, les moyens d'actionnement (85) coopèrent avec une courbe de positionnement (86) fixe par rapport au porte-chariot (21).

9. Dispositif de manipulation selon l'une des revendications 4 à 8, **caractérisé en ce qu'**il est prévu des moyens d'appui (74) qui fixent l'entraîneur (64) dans la position de prise coopérant avec la partie de déviation (69).

10. Dispositif de manipulation selon la revendication 9 en combinaison avec l'une des revendications 6 à 8, **caractérisé en ce que** les moyens d'appui (74) sont formés par l'élément d'aiguillage (77), qui peut être positionné dans une position intermédiaire où il s'engage en dessous de l'entraîneur (64) en position de prise et forme alors un appui.

11. Dispositif de manipulation selon la revendication 9 ou 10, **caractérisé en ce que** la courbe de définition de voie (42) comporte deux sections de courbe (43a, 43b), qui comportent chacune une des parties d'extrémité linéaires (45a, 45b) et la partie courbe (46a, 46b) adjacente, et qui comportent des zones d'embouchure (48a, 48b), qui sont orientées l'une vers l'autre et sont alignées l'une avec l'autre dans la direction du deuxième axe de déplacement (18) et qui sont disposées à distance l'une par rapport à l'autre en formant un intervalle (44) interrompant la courbe de définition de voie (42), le suiveur de courbe (52), lorsqu'il passe entre les deux zones d'embouchure (48a, 48b) écartées l'une de l'autre, étant maintenu à une distance constante du deuxième axe de déplacement (18) par l'entraîneur (64) fixé dans la position de prise.

12. Dispositif de manipulation selon la revendication 11, **caractérisé en ce que** les sections de courbe (43a, 43b) peuvent être positionnées avec une distance variable l'une par rapport à l'autre dans la direction du deuxième axe de déplacement (18), de telle sorte qu'il est possible de prédéfinir de manière variable la longueur d'une partie intermédiaire (12c) qui s'étend entre les parties d'extrémité linéaires (12a, 12b) de la voie opératoire (5) en forme de U.

13. Dispositif de manipulation selon la revendication 12, **caractérisé en ce que** les sections courbes (43a, 43b) sont prévues chacune sur un support de courbe (35a, 35b) relié au porte-chariot (21) de manière réglable dans la direction du deuxième axe de déplacement (18).

14. Dispositif de manipulation selon l'une des revendications 1 à 13, **caractérisé en ce que** l'élément d'entraînement (25) fait partie intégrante d'un entraînement linéaire (24) pouvant être actionné par la force d'un fluide ou électriquement.

15. Dispositif de manipulation selon la revendication 14, **caractérisé en ce que** l'élément d'entraînement (25) est formé par l'élément entraîné d'un entraînement linéaire sans tige de piston, en particulier un cylindre dit à fente.

16. Dispositif de manipulation selon la revendication 14 ou 15, **caractérisé en ce que** le porte-chariot (21) est formé par le carter de l'entraînement linéaire (24).
